# EUROPEAN PATENT SPECIFICATION

(11) **EP 4 253 659 B1**
(45) Date of publication and mention of the grant of the patent: **29.04.2026**
(21) Application number: 22305412.3
(22) Date of filing: 31.03.2022
(51) Int. Cl.: E01F 8/02, A01G 9/02, E04C 1/39

(54) **A BLOCK FOR A VEGETATION WALL**
BLOCK FÜR EINE VEGETATIONSWAND
BLOC POUR MUR VÉGÉTAL

(43) Date of publication of application: 04.10.2023
(73) Proprietor: Holcim Technology Ltd, 6300 Zug (CH)
(72) Inventor: MORIN, Vincent, 38070 Saint Quentin Fallavier (FR); DUBOIS-BRUGGER, Isabelle, 38070 Saint Quentin Fallavier (FR); DUCHAND, Sylvain, 38070 Saint Quentin Fallavier (FR); JAY, Pascal, 38070 Saint Quentin Fallavier (FR)
(74) Representative: Regimbeau

(56) References cited:
- WO-A1-2005/113911
- US-A1- 2012 180 388
- US-B1- 7 818 919

## Description

### TECHNICAL FIELD

The present disclosure relates generally to a block for constructing a vegetation wall and to the vegetation wall constructed therefrom.

### BACKGROUND

Heat islands are urbanized areas that experience higher temperatures than outlying areas. Structures such as buildings, roads, and other infrastructure absorb and reemit the sun's heat more than natural landscapes such as forests and water bodies.

Rendering construction elements, such as buildings, green is a practice that is becoming increasingly widespread and increasingly sought after to reduce the heat island effect. In addition, rendering construction elements green is a sought-after practice for aesthetic, thermal or phonic insulation and air or water quality reasons. The covering of surfaces with vegetation thus makes a real contribution to the quality of life of inhabitants of urban areas.

Generally speaking, existing green wall structures are considered luxury items due to the significant costs of maintaining the wall and the vegetation disposed therein. The cost per square meter of green wall structures can amount to several hundred euros per year. One maintenance feature is watering of the vegetation of the wall. Existing green wall structures often require the integration of complex irrigation systems therein to support and grow the vegetation.

Thus, there is a need to develop a technology for rendering construction elements green having both a reduce cost of initial construction and reduced upkeep cost, especially with respect to the watering of vegetation of the wall.

Patent application WO2005/113911 discloses a moulded block made from concrete suitable for the building of a supporting wall in which the individual moulded blocks are arranged in layers over each other. The moulded block is embodied as a block with three cavities, whereby, on layered offset arrangement of the moulded blocks in a supporting wall, the load-supporting regions of the superimposed moulded blocks are arranged essentially continuously in the load-carrying direction. The described moulded blocks are not configured to retain soil and/or plants and WO2005/113911 contains no teachings related to the construction of a vegetation wall.

US7818919B1 discloses a planter block to be mounted within a wall, including a face portion configured as a cavity to be filled with plants and soil.

### BRIEF SUMMARY

One objective of the present disclosure is to provide a block used for construction of a vegetation wall. As explained in further detail below, each block is configured such that, when a plurality of blocks are assembled together, a watering system is integrally formed therewith. Accordingly, the cost of construction and maintenance of the wall is reduced relative to the vegetation walls requiring separately integrating irrigation or watering systems.

To this end, the invention proposes a block for supporting vegetation growth comprising a back wall, a front wall, a first sidewall extending between and connecting the back wall and the front wall, and a second sidewall extending between and connecting the back wall and the front wall. The block further comprises a first inner wall extending from the back wall to the first sidewall. The first inner wall, the back wall, and the first sidewall collectively define a first opening. The first inner wall intersects the back wall at a lateral distance measured from a first side surface of the back wall that is greater than about 33% and less than about 45% of the length of the back wall. The first inner wall intersects the first sidewall at a lateral distance measured from a rear surface of the back wall that is greater than about 50% and less than or equal to about 65% of a depth of the block. The block further comprises a second inner wall extending from the back wall to the second sidewall. The second inner wall, the back wall, and the second sidewall collectively defining a second opening. The second inner wall intersects the back wall at a lateral distance measured from a second side surface of the back wall that is greater than about 33% and less than about 45% of the length of the back wall. The second inner wall intersects the second sidewall at a lateral distance measured from the rear surface of the back wall that is greater than about 50% and less than or equal to about 65% of the depth of the block. The back wall, the front wall, the first sidewall, the second sidewall, the first inner wall, and the second inner wall collectively define a third opening.

Certain preferred but non-limiting features of the block described above are the following, taken individually or in combination:
the first inner wall extends parallel to the second sidewall, and the second inner wall extends parallel to the first sidewall;
the front wall extends parallel to the back wall;
the first sidewall and the second sidewall extend in a converging manner from the back wall to the front wall;
each of the first opening and the second opening extends through the block such that each of the first opening and the second opening is open at both an upper surface and a lower surface of the block;
the third opening has a base such that the third opening is open at the upper surface of the block and closed at the lower surface of the block; and/or
the block is composed of a porous concrete material.

Another objective of the present disclosure is to provide a wall comprising a plurality of the blocks described above. The plurality of blocks comprising a first block and a second block in a first row and a third block in a second row, and the first row is located vertically adjacent to the second row. The first block, the second block, and the third block are arranged such that the first block and the second block are disposed over an upper surface of the third block. The first block and the second block are disposed against each other on a side surface of the respective back walls thereof and meet intermediately along a length of the back wall of the third block. The second opening of the first block overlaps with the first opening of the third block and the first opening of the second block overlaps with the second opening of the third block. The respectively overlapping first and second openings collectively form a channel. Each channel extends vertically through the first and second rows such that water is able to flow to each row.

Certain preferred but non-limiting features of the block described above are the following, taken individually or in combination:
the second opening of the first block also overlaps with the third opening of the third block such that, when the first and third blocks are viewed in a top view of the upper surfaces thereof, a first gap is visible between an inner surface of the second sidewall of the first block and an inner surface of the first inner wall of the third block;
the first opening of the second block also overlaps with the third opening of the third block such that, when the second and third blocks are viewed in a top view of the upper surfaces thereof, a second gap is visible between an inner surface of the first sidewall of the second block and an inner surface of the second inner wall of the third block;
the second inner wall of the first block is disposed over the first sidewall of the third block such that the second opening of the first block is aligned with the first opening of the third block, and wherein the first inner wall of the second block is disposed over the second sidewall of the third block such that the first opening of the second block is aligned with the second opening of the third block;
the third opening of the third block comprises soil and vegetation;
a water-absorbent material is disposed in the channels;
the plurality of blocks are disposed on a vertical surface of a pre-existing structure; and/or
the wall further comprises a water collection system, the water collection system configured to direct water into the channel.

### BRIEF DESCRIPTION OF THE DRAWINGS

The illustrations presented herein are not meant to be actual views of any particular component, device, or system, but are merely idealized representations which are employed to describe embodiments of the present invention. Other features, goals, and advantages of the present invention will appear more clearly upon reading of the detailed description that follows and with references to drawings provided by way of non-limiting examples wherein:
FIGS. 1 and 2 are a schematic, top view and perspective view of a block, respectively;
FIGS. 3 and 4 are schematic tops views of an assembly of the blocks as illustrated in FIGS. 1 and 2;
FIGS. 5 and 6 are perspective views of a wall constructed from the blocks of FIG. 1;
FIG. 7 is a schematic top view of a block; and
FIG. 8 is a top view of an assembly of blocks as illustrated in FIG. 7.

### DETAILED DESCRIPTION

As used herein, spatially relative terms, such as "below," "lower," "above," "over," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the devices in addition to the orientation depicted in the figures. For example, if devices in the figures are inverted, elements described as "upper" or "on" other elements or features would then be oriented "lower" or "under" the other elements or features.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances.

As used herein, the term "about" in reference to a given parameter is inclusive of the stated value and has the meaning dictated by the context (e.g., it includes the degree of error associated with measurement of the given parameter).

As used herein, the term "and/or" includes any and all combinations of one or more of the associated listed items.

As used herein, the terms "comprising," "including," "containing," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "configured" refers to a size, shape, orientation, and arrangement of at least one structure and at least one apparatus facilitating operation of the structure or the apparatus in a pre-determined way.

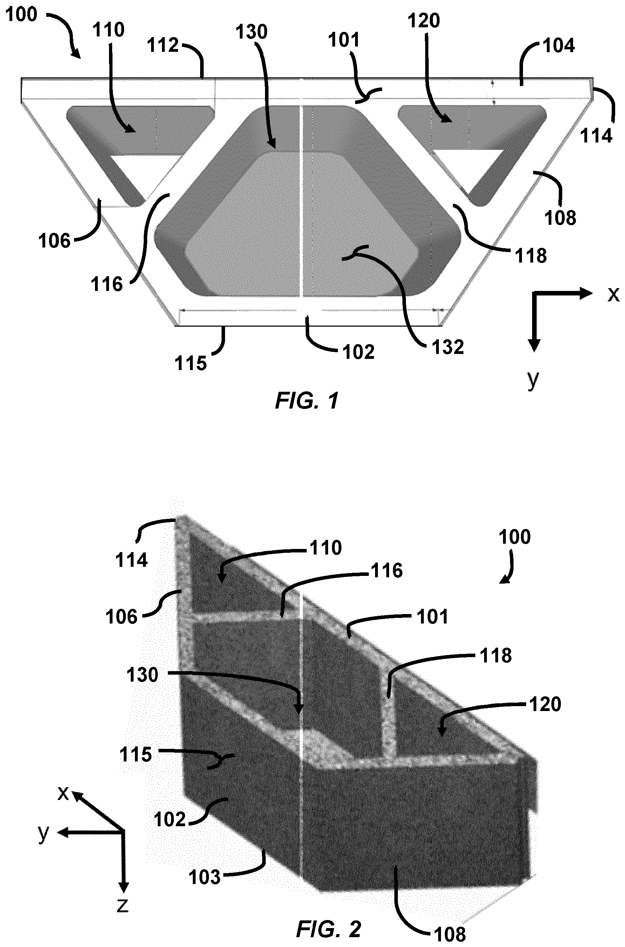

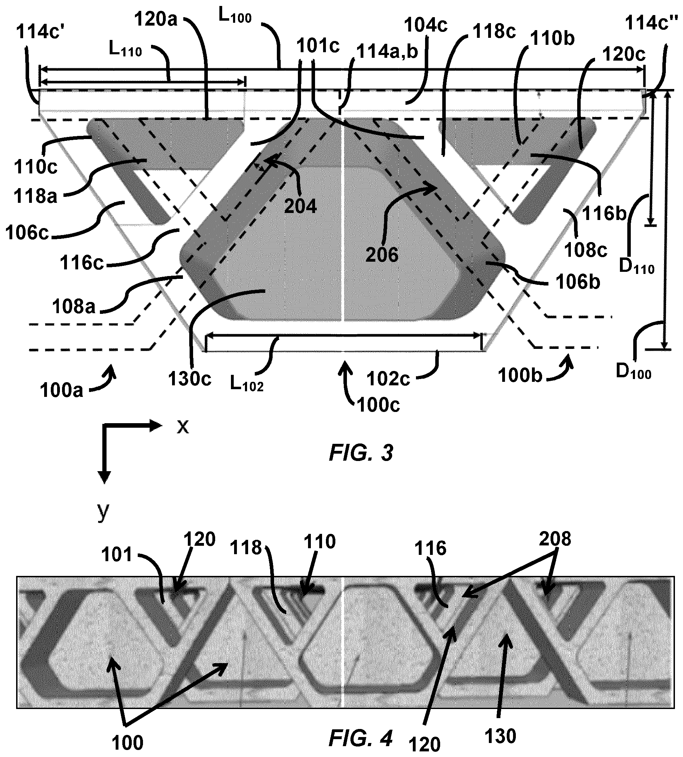

FIGS. 1-3 illustrate a block 100 according to embodiments of the present disclosure. FIGS. 4-6 illustrate a wall 200 favorable to the growth of vegetation formed from a plurality of the blocks 100 as will be explained in further detail below.

The block 100 is a unitary structure defining a plurality of openings. As used herein, the term "unitary structure" means a structure formed as a single piece or single unit.

The block 100 comprises a front wall 102, a back wall 104, a first sidewall 106, and a second sidewall 108. The first and second sidewalls 106, 108 extend between and connect the front wall 102 and the back wall 104. Collectively, the front wall 102, the back wall 104, the first sidewall 106, and the second sidewall 108 define a perimeter of the block 100.

A coordinate system is illustrated in FIGS. 1 and 2. As used herein, the terms "axial," "axially," "vertical," "vertically," "longitudinal," and "longitudinally" generally mean and refer to a direction along or parallel to the z-direction in the coordinate system. Thus, the vertical direction is a direction extending from an upper surface 101 to a lower surface 103 of the block 100 described herein. As used herein, the term "height" refers to a dimension measured in the z-direction. As used herein, the terms "horizontal," "horizontally," "lateral" and "laterally" generally means and refers to a direction along or parallel to either the x-direction or y-direction. Thus, the lateral direction is a direction parallel to a plane in which the upper surface 101 of the block 100 lies. The lateral direction is perpendicular to the vertical or longitudinal direction.

A rear surface 112 of the back wall 104 may be disposed on or over a structure on which the wall 200 is to be constructed. Side surfaces 114 of the back wall 104 may be disposed against a side surface of a laterally adjacent block 100 when a plurality of blocks 100 are assembled together to form the wall 200.

As used herein, the term "length" refers to a direction along or parallel to the x-direction in the coordinate system. The length L₁₀₀ refers to a maximum length of the block 100, which is measured along the back wall 104. The length L₁₀₂ refers to a minimum length of the block 100, which is measured along the front wall 102.

As used herein, the term "depth" refers to a direction along or parallel to the y-direction in the coordinate system. The depth D₁₀₀ refers to a maximum depth of the block 100, which is measure between a rear surface 112 of the back wall 104 and a front surface 115 of the front wall 102.

The first sidewall 106, the second sidewall 108, the front wall 102 and the back wall 104 may be dimensioned and/or arranged such that the block 100 decreases in length between the back wall 104 and the front wall 102.

The front wall 102 and back wall 104 may extend parallel to each other. The front wall 102 is shorter in length than the back wall 104. In some embodiments, the length L₁₀₂ of the front wall 102 may be between 40% and 60% of the length of the back wall 104 (i.e., the length L₁₀₀ of the block 100) and, more particularly, the length L₁₀₂ may be about 50% of the length of the back wall 104.

The first sidewall 106 and the second sidewall 108 extend in a converging manner as the sidewalls 106, 108 extend from the back wall 104 to the front wall 102. Accordingly, the block 100 may taper in length between the back wall 104 and the front wall 102.

By way of non-limiting example, the length L₁₀₄ of the back wall 104 may be 0.55 m and the length L₁₀₂ of the front wall 102 may be 0.23 m according to one embodiment.

The block 100 further comprises a first inner wall 116 and a second inner wall 118. The first inner wall 116 and the second inner wall 118 are provided to at least partially define three openings 110, 120, 130. For instance, the first inner wall 116 separates a first opening 110 from a third opening 130. The second inner wall 118 separates a second opening 120 from the third opening 130.

The first inner wall 116 extends from the back wall 104 to the first sidewall 106. The first inner wall 116 extends parallel to the second sidewall 108. The first opening 110 is defined by (e.g., bounded by) the first inner wall 116, a portion of the first sidewall 106, and a portion of the back wall 104.

The second inner wall 118 extends from the back wall 104 to the second sidewall 108. The second inner wall 118 extends parallel to the first sidewall 106. The second opening 120 is defined by the second inner wall 118, a portion of the second sidewall 108, and a portion of the back wall 104.

The first opening 110 and the second opening 120 may be generally triangular in shape. More particularly, the first opening 110 and the second opening 120 may have the shape of an isosceles triangles. The base of the triangular shaped openings 110, 120 may be greater in dimension than the height of the triangular shaped openings 110, 120. The base of the triangular shaped openings 110, 120 may be defined by the back wall 104. The corners of the triangle may be rounded so as to reduce stress concentrations.

The size of the first opening 110 is established at least in part by the location of the first inner wall 116 relative to the back wall 104 and the first sidewall 106. As best illustrated in FIG. 3, the first inner wall 116 intersects (e.g., meets) the back wall 104 at a lateral distance L₁₁₀ measured in the x-direction from a first side surface 114' of the back wall 104, and the first inner wall 116 intersects the first sidewall 106 at a lateral distance D₁₁₀ measured in the y-direction from the rear surface 112 of the back wall 104.

The lateral distance L₁₁₀ is selected to be greater than 33% of the length L₁₀₀ of the block 100. More particularly, the lateral distance L₁₁₀ is selected to be greater than 33% of the length L₁₀₀ of the block 100 and less than about 40% of the length L₁₀₀ of the block 100 and, preferably, may be about 34% of the length L₁₀₀ of the block 100. By way of non-limiting example, the lateral distance L₁₁₀ according to one embodiment may be 0.19 m and the length L₁₀₀ of the block 100 may be 0.55 m.

The lateral distance D₁₁₀ is selected to be greater than or equal to 50% of the depth D₁₀₀ of the block 100. More particularly, the lateral distance D₁₁₀ is selected to be greater than or equal to 50% of the depth D₁₀₀ of the block 100 and less than or equal to about 60% of the depth D₁₀₀ of the block 100 and, preferably, may be about 52% of the D₁₀₀ of the block 100. By way of non-limiting example, lateral distance D₁₁₀ according to one embodiment may be 0.13 m and the depth D₁₀₀ of the block 100 may be 0.25 m.

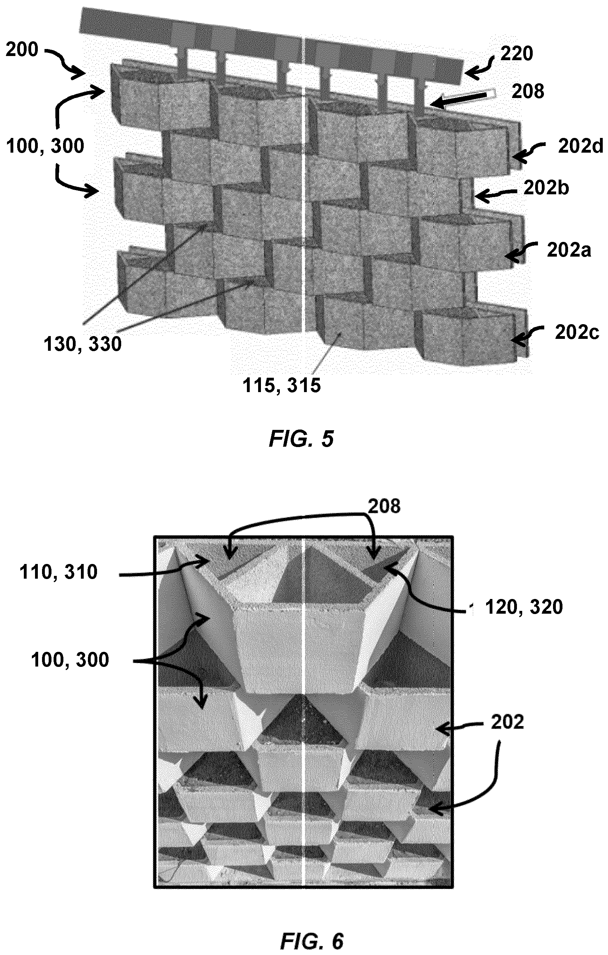

The block 100 as illustrated and described with reference to FIGS. 1-3 are designed such that when a plurality of blocks 100 are assembled together, first and second openings 110, 120 of vertically adjacent blocks 100 overlap to form channels 208, as illustrated in FIGS. 4 and 5. In such embodiments, the first and second openings 110, 120 are sized such that a portion of the third opening 130 is exposed within the channel 208 to form gaps 204, 206. Such channels 208 may be considered staggered as an axis extending along the z-axis centrally through the openings 110, 120 of a given block is offset (e.g., not aligned) with the respective to a corresponding z-axis in a vertically adjacent block.

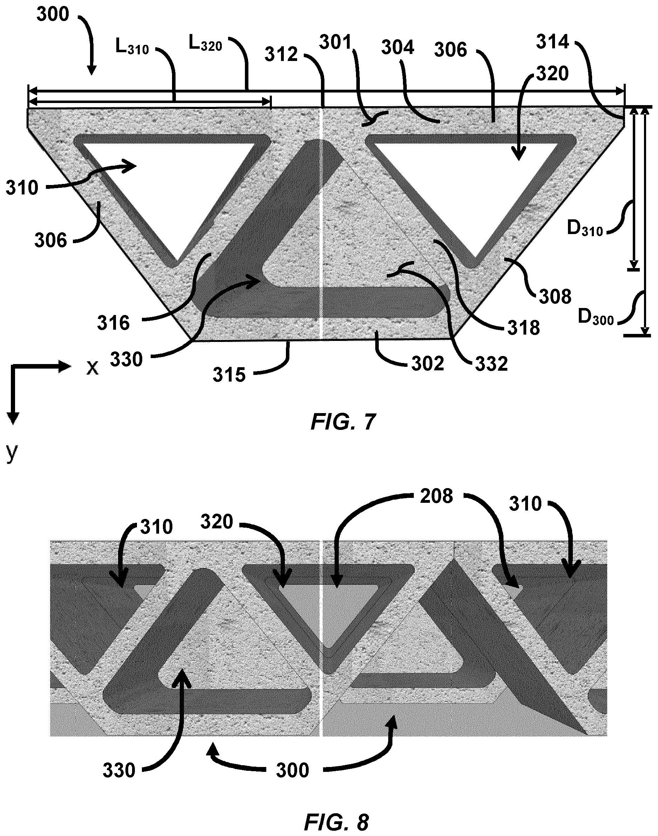

In other embodiments, a block may be configured such the location of the inner walls separating the first opening from the third opening and the second opening from the third opening is such that the first and second openings of vertically adjacent blocks 100 overlap to form channels in an aligned manner wherein gaps 204, 206 do not exist. FIG. 7 illustrates a block 300 according to such other embodiments.

Due to similarities between the block 100 and the block 300, elements common to the block 100 are referred to with similar numerals within the 300-series of numbers with reference to the block 300.

The block 300 comprises a front wall 302, a back wall 304, a first sidewall 306, and a second sidewall 308. The block 300 further comprises a first inner wall 316 and a second inner wall 318. The first inner wall 316 and the second inner wall 318 are provided to at least partially define three openings 310, 320, 330. For instance, the first inner wall 316 separates a first opening 310 from a third opening 330. The second inner wall 318 separates a second opening 320 from the third opening 330.

The size of the first opening 310 is established at least in part by the location of the first inner wall 316 relative to the back wall 304 and the first sidewall 306. As best illustrated in FIG. 7, the first inner wall 316 intersects (e.g., meets) the back wall 304 at a lateral distance L₃₁₀ measured in the x-direction from a first side surface 314 of the back wall 304, and the first inner wall 316 intersects the first sidewall 306 at a lateral distance D₃₁₀ measured in the y-direction from the rear surface 312 of the back wall 304.

The first opening 310 and the second opening 320 have substantially the same size and shape. Accordingly, the second inner wall 318 intersects the back wall 304 at a lateral distance measured in the x-direction from a second side surface 314 of the back wall 304 which is substantially the same as the lateral distance D₃₁₀, and the second inner wall 318 intersects the second sidewall 308 at a lateral distance measured in the y-direction from the rear surface 312 of the back wall 304 which is substantially the same as the lateral distance D₃₁₀.

The lateral distance L₃₁₀ is selected to be greater than or equal to 35% of the length L₃₀₀ of the block 300. More particularly, the lateral distance L₃₁₀ is selected to be greater than or equal to 35% of the length L₃₀₀ of the block 100 and less than or equal to about 43% of the length L₃₀₀ of the block 300 and, preferably, may be about 42% of the length L₃₀₀ of the block 300. By way of non-limiting example, the lateral distance L₃₁₀ according to one embodiment may be 0.23 m and the length L₃₀₀ of the block 300 may be 0.55 m.

The lateral distance D₃₁₀ is selected to be greater than 50% of the depth D₃₀₀ of the block 300. More particularly, the lateral distance D₃₁₀ is selected to be greater than or equal to 53% of the depth D₃₀₀ of the block 300 and less than or equal to about 65% of the depth D₃₀₀ of the block 300 and, preferably, may be about 64% of the D₃₀₀ of the block 300. By way of non-limiting example, lateral distance D₃₁₀ according to one embodiment may be 0.16 m and the depth D₃₀₀ of the block 300 may be 0.25 m.

The blocks 100, 300 may be formed of a concrete composition. As used herein, the term "concrete composition" refers to a composition comprising hydraulic binder and aggregates which in presence of water forms a paste which sets and hardens by means of hydration reactions and processes and which, after hardening, retains its strength and stability even under water. Specifically concrete is as defined in standard NF EN 197-1 Standard of April 2012, preferably cement of the types CEM I, CEM II, CEM III, CEM IV or CEM V. Alternatively, the said suitable cement can be a mixture of a CEM I type with any one or several constituents listed in the European Standard of April 2012.

As used herein, the term "hydraulic binder" refers to a material which sets and hardens by hydration, for example a cement.

Specifically, the concrete composition is based on cement comprising Portland clinker.

Calcium sulphate is commonly added to Portland clinker to prepare a Portland cement.

Calcium sulphate includes gypsum (calcium sulphate dihydrate, CaSO₄.2H₂O), hemi-hydrate (CaSO₄.1/2H₂O), anhydrite (anhydrous calcium sulphate, CaSO₄) or a mixture thereof.

Further, the hydraulic binder may also comprise other mineral components often called "supplementary cementitious materials (SCM)", in particular slag, fly ash, calcined clays, limestone, pozzolan, metakaolin, cement kiln dust, and mixtures thereof, preferably at a content comprised between 6 and 50 wt.-% of the total hydraulic binder.

Any known aggregates suitable for the preparation of concrete may be used for the concrete composition. The aggregates may have a maximum size of 10 mm and, preferably, have a maximum size of 6 mm.

The aggregates can comprise gravel and sand.

Any known sand suitable for the preparation of concrete is suitable for the concrete composition. The sand may have a maximum size of 2 mm and, preferably, a maximum size of 1 mm. The sand may have a minimum size of greater than 0 mm or of 0.063 mm.

The water to binder ratio is preferably between 0.18 and 0.35 and, more preferably between 0.20 and 0.30.

As used herein, the term "water" includes the water added for mixing and eventually the water of the admixtures.

The concrete material may be porous. The porosity of the concrete material is selected such that water may flow through the first side wall 106, 306, the second side wall 108, 308, the first inner wall 116, 316, and the second inner wall 118, 318 of the block 100, 300 as explained in further detail below. In some embodiments, the porosity of the concrete material of the blocks may be in a range from 15% to 25%, inclusive.

In some embodiments, the front surface 115, 315 of the front wall 102, 302 may have a sealant material thereon. The sealant material is configured to prevent evaporation of water from within the block 100, 300. By way of example, the sealing material may be a mortar sealant or an organic sealant.

A plurality of blocks 100 or a plurality of blocks 300 having a design as described herein may be stacked together to form a vertical construction (e.g., wall 200). FIG. 3 illustrates the block 100 of FIG. 1 and the outline in dashed lines of a portion of two additional blocks 100a, 100b arranged over the block 100c. The dashed lines are equally representative of two additional blocks 100a, 100b arranged below the block 100c. FIG. 4 is a top view of a wall 200 of blocks 100. FIGS. 5 and 6 are perspective views of the wall 200 of blocks 100. FG. 8 is a top view of a wall 200 constructed of blocks 300.

For clarity of this disclosure, construction of the wall 200 will be described primarily with reference to block 100 except when construction of the wall 200 using blocks 300 differs from construction of the wall 200 using blocks 100. Otherwise, the skilled person will understand that the wall 200 can be equally be constructed with a plurality of blocks 300 as shown and described with reference to FIGS. 7 and 8. The wall 200 comprises at least two rows 202 of blocks 100. Each row 202 may comprise at least one block 100.

As best illustrated in FIGS. 4 and 5, the blocks 100 may be arranged in a block laying patterned known as a "stretcher bond." In this arrangement, each block 200 of a first row 202a is offset by a half block relative to another block 200 of a second row 202b located vertically adjacent to the first row 202a. Put differently, two laterally adjacent blocks 100 in the first row 202a are disposed against one another at the side surfaces 114 thereof intermediately along the length L₁₀₀ of a block 100 in the second row 202b. Further, in this arrangement, the blocks 100 of every other row 202 of blocks 100 are vertically aligned.

The wall 200 may be constructed on a preexisting structure. For example, the wall 200 is constructed on a façade of a building or other structure having a substantially vertically extending surface. In construction, each block 100 may be coupled to the preexisting structure with mortar such that mortar is provided between the rear surface 112 of the block 100 and the preexisting structure.

The rows 202 may be laid in sequence starting from a lowermost row 202c to an uppermost row 202d and are laid vertically one over the other. The lower surface 103 of one block 100 may be directly disposed on the upper surface 101 of a vertically adjacent block 100 or mortar may be provided between the vertically adjacent surfaces.

The wall 200 may also be provided with a water source 220. The water source 220 may be part of a water collection system, such as a rainwater collecting system including a gutter or another collecting system provided naturally or artificially with water. The water source 220 is located vertically above the uppermost row 202d of the wall 200.

With continued reference to FIG. 3, two laterally adjacent upper blocks 100a and 100b are located vertically adjacent to a lower block 100c. Each of the blocks 100a, 100b, 100c is identical and includes elements previously discussed with reference to FIGS. 1 and 2. For convenience of explanation and illustration, similar elements of the first block 100a are identified with an *a*, similar elements of the second block 100b are identified with a *b,* and similar elements of the third block 100c are identified with a c.

When the blocks 100a, 100b, 100c are arranged to form a portion of the wall 200, the respective lower surfaces 103 of the upper blocks 100a, 100b are disposed over (e.g., on) the upper surface 101 of the lower block 100c. The first upper block 100a and second upper block 100b contact each other at the side surfaces 114 intermediately along the length L₁₀₀ of the lower block 100c.

The blocks 100a, 100b, 100c are configured and arranged such that openings 110, 120 of vertically adjacent blocks 100 form a channel 208 extending from an upper surface of the upper block to the lower surface of the lower block. As best illustrated in FIG. 3, the second opening 120a of the first block 100a overlaps with the first opening 110c of the lower block 100c, and the first opening 110b of the second block 100b overlaps with the second opening 120c of the lower block 100c. This channel 208 extends from the upper surface 101 of a block 100 in the uppermost row 202d to the lower surface 103 of a block 100 in a lowermost row 202c.

In addition, the blocks 100a, 100b, 100c are configured and arranged such that the second opening 120a of the first block 100a overlaps with the third opening 130c of the lower block 100c, and the first opening 110b of the second upper block 100b overlaps with the third opening 130c of the lower block 100c. When these openings overlap and when the blocks 100a, 100b, 100c are viewed in a top view of the upper surface 100 of the blocks 100a, 100b, 100c, a first gap 204 is visible between an inner surface of the second sidewall 108a of the first upper block 100a and an inner surface of the first inner wall 116c of the lower block 100c, and a second gap 206 is visible between an inner surface of the first sidewall 106b of the second upper block 100b and an inner surface of the second inner wall 118c of the lower block 100c.

The size of the first opening 110 and the second openings 120 and may be modified by adjusting the lateral distance L₁₁₀ as a function of the length L₁₀₀ of the block 100, adjusting the lateral distance D₁₁₀ as a function of the depth D₁₀₀ of the block 100, and/or adjusting the thickness of the first and second inner walls 116, 118. Adjusting the size of the openings 110, 120 may also modify the size of the first gap 204 and the second gap 206.

As illustrated in FIG. 3 and 4, the upper surface of the first inner wall 116c and of the second inner wall 118c of the lower block 100c may be exposed within the channel 208.

The block 300 is configured such that, when a plurality of blocks 300 are arranged to form the wall 200, openings 310, 320 of vertically adjacent blocks 300 also form a channel 208 extending from an upper surface of the upper block to the lower surface of the lower block. More particularly, the second opening 320 of a first block 300 overlaps with the first opening 310 of a vertically adjacent second block 300. Unlike the blocks 100, when a plurality of blocks 300 are arranged to form the wall 200, the openings 310, 320 do not overlap with the third opening 330 of a vertically adjacent block. The second inner wall 318 of the first block 300 is disposed directly over or under the first sidewall 306 of a vertically adjacent block 300, and the first inner wall 316 of the first block 300 will be disposed directly over or under the second sidewall 308 of a vertically adjacent block 300. Thus, upper surfaces of the first inner wall 316 and of the second inner wall 318 of the blocks 300 are not exposed within the channel 208.

Unlike the columns 208 of a wall 200 formed from blocks 100, the columns 208 of the wall 200 formed from blocks 300 may be considered aligned. An axis extending along the z-axis centrally through the openings 310, 320 of a given block 300 is aligned (e.g., coaxial) with the respective to a corresponding z-axis in a vertically adjacent block 300.

During or after construction of the wall 200, the third opening 130, 330 of the blocks 100, 300 may be at least partially filled with soil or other material supportive of vegetation growth. The third opening 130, 330 may further comprise seeds and/or a vegetation within the soil.

Due to the arrangement of the blocks 100, 300, the third opening 130, 330 is substantially uncovered at the upper surface 101, 301 allowing vegetation to be exposed to rain water and sun for growth.

A water-absorbent material may be disposed within the blocks 100, 300. Water-absorbent materials may include perlite, vermiculite, an expanded clay aggregate, a superabsorbent polymer, and the like. Such water-absorbent materials are useful to maintain moisture within the wall 200.

The water-absorbent material is provided within the first openings 110, 310 and the second openings 120, 320 such that each channel 208 of the wall 200 is substantially filled with the water-absorbent material. When the water-absorbent material is provided in the channel 208, the water-absorbent material may be disposed on and/or adjacent to surfaces the first inner walls 116, 316 and the second inner walls 118, 318 and the first sidewalls 106, 306 and the second sidewalls 108, 308. In some embodiments in which gaps 204, 206 are formed, the third opening 130, 330 may also comprises the water-absorbent material. In some embodiments, the water-absorbent material may be disposed within the portion of the third opening 130 in the gaps 204, 206.

The blocks 100, 300 when assembled to form the wall 200 create an integral water system for maintaining vegetation. Put differently, assembly of the blocks 100, 300 simultaneously constructs the wall 200 in which vegetation is planted and grown and creates the watering system for maintaining the planted vegetation. Thus, construction of the wall 200 does not require the additional incorporation of a separate watering system to direct the flow of water to the openings 130, 330 and the vegetation therein.

In operation, water is provided into the wall 200 by the water source 220. The water source 220 may direct the flow of water into the channels 208. Water flows naturally (e.g., by gravity) through the channels 208.

As water flows along surfaces of the blocks 100, 300 within the channels 208, the water is absorbed by the water-absorbent material provided in channels 208 of the blocks 100. Water absorbed by the water-absorbent material subsequently permeates through the first inner walls 116, 316 and second inner walls 118, 318 so as to provide water to the soil and vegetation in the third openings 130. Some water may also flow directly into the third openings 130 flows into the wall 200 from the channel 208 by flowing into the gaps 204, 206. Some water absorbed by the water-absorbent material may also be maintained within the water-absorbent material, thereby maintaining a sufficient level of humidity within the wall 200 to encourage vegetation maintenance and growth. The optional sealant material provided on the front surface 115, 315 of the block 100, 300 may also limit the evaporation of water from within the third opening 130, 330 and otherwise facilitate maintenance of a sufficient level of humidity within the wall 200.

## Claims

1. A block (100, 300) for supporting vegetation growth, comprising:
a back wall (104, 304);
a front wall (102, 302);
a first sidewall (106, 306) extending between and connecting the back wall (104, 304) and the front wall (102, 302);
a second sidewall (108, 308) extending between and connecting the back wall (104, 304) and the front wall (102, 302);
a first inner wall (116, 316) extending from the back wall (104, 304) to the first sidewall (106, 306), the first inner wall (116, 316), the back wall (104, 304), and the first sidewall (106, 306) collectively defining a first opening (110, 310), wherein the first inner wall (116, 316) intersects the back wall (104, 304) at a lateral distance L₁₁₀ measured from a first side surface (114, 314) of the back wall (104, 304) that is greater than about 33% and less than about 45% of the length L₁₀₀ of the back wall (104, 304), the first inner wall (116, 316) intersects the first sidewall (106, 306) at a lateral distance measured from a rear surface (112, 312) of the back wall (104, 304) that is greater than about 50% and less than or equal to about 65% of a depth (D₁₀₀) of the block (100, 300); and
a second inner wall (118, 318) extending from the back wall (104, 304) to the second sidewall (108, 308), the second inner wall (118, 318), the back wall (104, 304), and the second sidewall (108, 308) collectively defining a second opening (120, 320), wherein the second inner wall (118, 318) intersects the back wall (104, 304) at a lateral distance L₁₁₀ measured from a second side surface (114, 314) of the back wall (104, 304) that is greater than about 33% and less than about 45% of the length L₁₀₀ of the back wall (104, 304), the second inner wall (118, 318) intersects the second sidewall (108, 308) at a lateral distance measured from the rear surface (112, 312) of the back wall (104, 304) that is greater than about 50% and less than or equal to about 65% of the depth (D₁₀₀) of the block (100, 300), wherein the back wall (104, 304), the front wall (102, 302), the first sidewall (106, 306), the second sidewall (108, 308), the first inner wall (116, 316), and the second inner wall (118, 318) define a third opening (130, 330).

2. The block (100, 300) of claim 1, wherein the first inner wall (116, 316) extends parallel to the second sidewall (108, 308), and the second inner wall (118, 318) extends parallel to the first sidewall (106, 306).

3. The block (100, 300) of either of claims 1 or 2, wherein the front wall (102, 302) extends parallel to the back wall (104, 304).

4. The block (100, 300) of any of claims 1-3, wherein the first sidewall (106, 306) and the second sidewall (108, 308) extend in a converging manner from the back wall (104, 304) to the front wall (102, 302).

5. The block (100, 300) of any of claims 1-4, wherein each of the first opening (110, 310) and the second opening (120, 320) extends through the block (100, 300) such that each of the first opening (110, 310) and the second opening (120, 320) is open at both an upper surface (101, 301) and a lower surface (103, 303) of the block (100, 300).

6. The block (100, 300) of any of claims 1-5, wherein the third opening (130, 330) has a base (132, 332) such that the third opening (130, 330) is open at the upper surface (101, 301) of the block (100, 300) and closed at the lower surface (103, 303) of the block (100, 300).

7. The block (100, 300) of any of claims 1-6, wherein the block (100, 300) is composed of a porous concrete material.

8. A wall (200) for vegetation growth, comprising:
a plurality of blocks (100, 300) according to any of claims 1-7, the plurality of blocks (100, 300) comprising a first block (100, 300) and a second block (100, 300) in a first row (202a) and a third block (100, 300) in a second row (202), the first row (202a) located vertically adjacent to the second row (202b), wherein the first block (100, 300), the second block (100, 300), and the third block (100, 300) arranged such that:
the first block (100, 300) and the second block (100, 300) are disposed over an upper surface (101, 301) of the third block (100, 300), the first block (100, 300) and the second block (100, 300) disposed against each other on a side surface (114, 314) of the respective back walls (104, 304) thereof, wherein the first block (100, 300) and the second block (100, 300) meet intermediately along a length (L₁₀₀) of the back wall (104, 304) of the third block (100, 300);
the second opening (120, 320) of the first block (100, 300) overlaps with the first opening (110, 310) of the third block (100, 300) and the first opening (110, 310) of the second block (100, 300) overlaps with the second opening (120, 320) of the third block (100, 300), the overlapping first and second openings (110, 120) collectively forming a plurality of channels (208), each channel (208) extending vertically through the plurality of rows (202) such that water flows to each row (202) of the plurality.

9. The wall (200) of claim 8, wherein:
the second opening (120) of the first block (100) overlaps with the third opening (110) of the third block (100) such that, when the first and third blocks are viewed in a top view of the upper surfaces (100) thereof, a first gap (204) is visible between an inner surface of the second sidewall (108) of the first block (100) and an inner surface of the first inner wall (116) of the third block (100), and
the first opening (110) of the second block (100) overlaps with the third opening (110) of the third block (100) such that, when the second and third blocks are viewed in a top view of the upper surfaces (100) thereof, a second gap (206) is visible between an inner surface of the first sidewall (106) of the second block (100) and an inner surface of the second inner wall (118) of the third block (100).

10. The wall (200) of claim 8, wherein the second inner wall (318) of the first block (300) is disposed over the first sidewall (306) of the third block (300) such that the second opening (120) of the first block (300) is aligned with the first opening (110) of the third block (300), and wherein the first inner wall (316) of the second block (300) is disposed over the second sidewall (308) of the third block (300) such that the first opening (110) of the second block (300) is aligned with the second opening (120) of the third block (300).

11. The wall (200) of any of claims 8-10, wherein the third opening (130c) of the third block (100, 300) comprises soil and vegetation.

12. The wall (200) of any of claims 8-11, wherein a water-absorbent material is disposed in the channels (208).

13. The wall (200) of any of claims 8-12, wherein the plurality of blocks (100, 300) are disposed on a vertical surface of a pre-existing structure.

14. The wall (200) of any of claims 8-13, further comprising a water collection system, the water collection system configured to direct water into the channel (208).

## Patentansprüche

1. Block (100, 300) zum Unterstützen eines Vegetationswachstums, der Folgendes umfasst:
eine Rückwand (104, 304);
eine Vorderwand (102, 302);
eine erste Seitenwand (106, 306), die sich zwischen der Rückwand (104, 304) und der Vorderwand (102, 302) erstreckt und dieselben verbindet;
eine zweite Seitenwand (108, 308), die sich zwischen der Rückwand (104, 304) und der Vorderwand (102, 302) erstreckt und dieselben verbindet;
eine erste Innenwand (116, 316), die sich von der Rückwand (104, 304) zur ersten Seitenwand (106, 306) erstreckt, wobei die erste Innenwand (116, 316), die Rückwand (104, 304) und die erste Seitenwand (106, 306) zusammen eine erste Öffnung (110, 310) definieren, wobei die erste Innenwand (116, 316) die Rückwand (104, 304) in einem Seitenabstand L₁₁₀ schneidet, der von einer ersten Seitenfläche (114, 314) der Rückwand (104, 304) gemessen wird und größer ist als ungefähr 33% und kleiner ist als ungefähr 45% der Länge L₁₀₀ der Rückwand (104, 304), die erste Innenwand (116, 316) die erste Seitenwand (106, 306) in einem Seitenabstand schneidet, der von einer Rückfläche (112, 312) der Rückwand (104, 304) gemessen wird und größer ist als ungefähr 50% und kleiner als oder gleich ungefähr 65% einer Tiefe (D₁₀₀) des Blocks (100, 300) ist; und
eine zweite Innenwand (118, 318), die sich von der Rückwand (104, 304) zur zweiten Seitenwand (108, 308) erstreckt, wobei die zweite Innenwand (118, 318), die Rückwand (104, 304) und die zweite Seitenwand (108, 308) zusammen eine zweite Öffnung (120, 320) definieren, wobei die zweite Innenwand (118, 318) die Rückwand (104, 304) in einem Seitenabstand L₁₁₀ schneidet, der von einer zweiten Seitenfläche (114, 314) der Rückwand (104, 304) gemessen wird und größer ist als ungefähr 33% und kleiner ist als ungefähr 45% der Länge L₁₀₀ der Rückwand (104, 304), die zweite Innenwand (118, 318) die zweite Seitenwand (108, 308) in einem Seitenabstand schneidet, der von der Rückfläche (112, 312) der Rückwand (104, 304) gemessen wird und größer ist als ungefähr 50% und kleiner als oder gleich ungefähr 65% der Tiefe (D₁₀₀) des Blocks (100, 300) ist,
wobei die Rückwand (104, 304), die Vorderwand (102, 302), die erste Seitenwand (106, 306), die zweite Seitenwand (108, 308), die erste Innenwand (116, 316) und die zweite Innenwand (118, 318) eine dritte Öffnung (130, 330) definieren.

2. Block (100, 300) nach Anspruch 1, wobei sich die erste Innenwand (116, 316) parallel zur zweiten Seitenwand (108, 308) erstreckt und sich die zweite Innenwand (118, 318) parallel zur ersten Seitenwand (106, 306) erstreckt.

3. Block (100, 300) entweder nach Anspruch 1 oder 2, wobei sich die Vorderwand (102, 302) parallel zur Rückwand (104, 304) erstreckt.

4. Block (100, 300) nach einem der Ansprüche 1 bis 3, wobei sich die erste Seitenwand (106, 306) und die zweite Seitenwand (108, 308) in einer konvergierenden Weise von der Rückwand (104, 304) zur Vorderwand (102, 302) erstrecken.

5. Block (100, 300) nach einem der Ansprüche 1 bis 4, wobei sich jede der ersten Öffnung (110, 310) und der zweiten Öffnung (120, 320) derart durch den Block (100, 300) erstreckt, dass jede der ersten Öffnung (110, 310) und der zweiten Öffnung (120, 320) sowohl an einer oberen Fläche (101, 301) als auch einer unteren Fläche (103, 303) des Blocks (100, 300) geöffnet ist.

6. Block (100, 300) nach einem der Ansprüche 1 bis 5, wobei die dritte Öffnung (130, 330) eine Basis (132, 332) aufweist, derart, dass die dritte Öffnung (130, 330) an der oberen Fläche (101, 301) des Blocks (100, 300) geöffnet und an der unteren Fläche (103, 303) des Blocks (100, 300) geschlossen ist.

7. Block (100, 300) nach einem der Ansprüche 1 bis 6, wobei der Block (100, 300) aus einem porösen Betonmaterial besteht.

8. Wand (200) für ein Vegetationswachstum, die Folgendes umfasst:
eine Vielzahl von Blöcken (100, 300) gemäß einem der Ansprüche 1 bis 7, wobei die Vielzahl von Blöcken (100, 300) einen ersten Block (100, 300) und einen zweiten Block (100, 300) in einer ersten Reihe (202a) und einen dritten Block (100, 300) in einer zweiten Reihe (202) umfasst, wobei die erste Reihe (202a) der zweiten Reihe (202b) vertikal benachbart ist, wobei der erste Block (100, 300), der zweite Block (100, 300) und der dritte Block (100, 300) derart positioniert sind, dass:
der erste Block (100, 300) und der zweite Block (100, 300) über einer oberen Fläche (101, 301) des dritten Blocks (100, 300) angeordnet sind, der erste Block (100, 300) und der zweite Block (100, 300) auf einer Seitenfläche (114, 314) der jeweiligen Rückwand (104, 304) davon gegeneinander angeordnet sind, wobei der erste Block (100, 300) und der zweite Block (100, 300) unmittelbar entlang einer Länge (L₁₀₀) der Rückwand (104, 304) des dritten Blocks (100, 300) aufeinandertreffen;
die zweite Öffnung (120, 320) des ersten Blocks (100, 300) die erste Öffnung (110, 310) des dritten Blocks (100, 300) überlappt und die erste Öffnung (110, 310) des zweiten Blocks (100, 300) die zweite Öffnung (120, 320) des dritten Blocks (100, 300) überlappt, wobei sich die überlappende erste und zweite Öffnung (110, 120) zusammen eine Vielzahl von Kanälen (208) bilden, wobei sich jeder Kanal (208) vertikal durch die Vielzahl von Reihen (202) erstreckt, derart, dass zu jeder Reihe (202) der Vielzahl Wasser fließt.

9. Wand (200) nach Anspruch 8, wobei:
die zweite Öffnung (120) des ersten Blocks (100) die dritte Öffnung (110) des dritten Blocks (100) derart überlappt, dass, wenn auf den ersten und den dritten Block in einer Draufsicht der oberen Flächen (100) davon gesehen wird, zwischen einer Innenfläche der zweiten Seitenwand (108) des ersten Blocks (100) und einer Innenfläche der ersten Innenwand (116) des dritten Blocks (100) ein erster Spalt (204) sichtbar ist, und
die erste Öffnung (110) des zweiten Blocks (100) die dritte Öffnung (110) des dritten Blocks (100) derart überlappt, dass, wenn auf den zweiten und den dritten Block in einer Draufsicht der oberen Flächen (100) davon gesehen wird, zwischen einer Innenfläche der ersten Seitenwand (106) des zweiten Blocks (100) und einer Innenfläche der zweiten Innenwand (118) des dritten Blocks (100) ein zweiter Spalt (206) sichtbar ist.

10. Wand (200) nach Anspruch 8, wobei die zweite Innenwand (318) des ersten Blocks (300) über der ersten Seitenwand (306) des dritten Blocks (300) derart angeordnet ist, dass die zweite Öffnung (120) des ersten Blocks (300) auf die erste Öffnung (110) des dritten Blocks (300) ausgerichtet ist, und wobei die erste Innenwand (316) des zweiten Blocks (300) über der zweiten Seitenwand (308) des dritten Blocks (300) derart angeordnet ist, dass die erste Öffnung (110) des zweiten Blocks (300) auf die zweite Öffnung (120) des dritten Blocks (300) ausgerichtet ist.

11. Wand (200) nach einem der Ansprüche 8 bis 10, wobei die dritte Öffnung (130c) des dritten Blocks (100, 300) Erde und Vegetation umfasst.

12. Wand (200) nach einem der Ansprüche 8 bis 11, wobei in den Kanälen (208) wasserabsorbierendes Material angeordnet ist.

13. Wand (200) nach einem der Ansprüche 8 bis 12, wobei die Vielzahl von Blöcken (100, 300) auf einer vertikalen Fläche einer bereits existierenden Struktur angeordnet sind.

14. Wand (200) nach einem der Ansprüche 8 bis 13, die ferner ein Wassersammelsystem umfasst, wobei das Wassersammelsystem dazu ausgelegt ist, Wasser in den Kanal (208) zu leiten.

## Revendications

1. Bloc (100, 300) destiné à favoriser la croissance de la végétation, comprenant :
une paroi arrière (104, 304) ;
une paroi avant (102, 302) ;
une première paroi latérale (106, 306) s'étendant entre la paroi arrière (104, 304) et la paroi avant (102, 302) et reliant celles-ci ;
une deuxième paroi latérale (108, 308) s'étendant entre la paroi arrière (104, 304) et la paroi avant (102, 302) et les reliant ;
une première paroi intérieure (116, 316) s'étendant de la paroi arrière (104, 304) à la première paroi latérale (106, 306), la première paroi intérieure (116, 316), la paroi arrière (104, 304) et la première paroi latérale (106, 306) définissant collectivement une première ouverture (110, 310), dans laquelle la première paroi intérieure (116, 316) coupe la paroi arrière (104, 304) à une distance latérale L₁₁₀ mesurée à partir d'une première surface latérale (114, 314) de la paroi arrière (104, 304) qui est supérieure à environ 33 % et inférieure à environ 45 % de la longueur L₁₀₀ de la paroi arrière (104, 304), la première paroi intérieure (116, 316) coupe la première paroi latérale (106, 306) à une distance latérale mesurée à partir d'une surface arrière (112, 312) de la paroi arrière (104, 304) qui est supérieure à environ 50 % et inférieure ou égale à environ 65 % d'une profondeur (D₁₀₀ ) du bloc (100, 300) ; et
une deuxième paroi intérieure (118, 318) s'étendant de la paroi arrière (104, 304) à la deuxième paroi latérale (108, 308), la deuxième paroi intérieure (118, 318), la paroi arrière (104, 304) et la deuxième paroi latérale (108, 308) définissant collectivement une deuxième ouverture (120, 320), dans laquelle la deuxième paroi intérieure (118, 318) coupe la paroi arrière (104, 304) à une distance latérale L₁₁₀ mesurée à partir d'une deuxième surface latérale (114, 314) de la paroi arrière (104, 304) qui est supérieure à environ 33 % et inférieure à environ 45 % de la longueur L₁₀₀ de la paroi arrière (104, 304), la deuxième paroi intérieure (118, 318) coupe la deuxième paroi latérale (108, 308) à une distance latérale mesurée à partir de la surface arrière (112, 312) de la paroi arrière (104, 304) qui est supérieure à environ 50 % et inférieure ou égale à environ 65 % de la profondeur (D₁₀₀ ) du bloc (100, 300),
dans lequel la paroi arrière (104, 304), la paroi avant (102, 302), la première paroi latérale (106, 306), la deuxième paroi latérale (108, 308), la première paroi intérieure (116, 316) et la deuxième paroi intérieure (118, 318) définissent une troisième ouverture (130, 330).

2. Le bloc (100, 300) selon la revendication 1, dans lequel la première paroi intérieure (116, 316) s'étend parallèlement à la deuxième paroi latérale (108, 308), et la deuxième paroi intérieure (118, 318) s'étend parallèlement à la première paroi latérale (106, 306).

3. Le bloc (100, 300) selon l'une des revendications 1 ou 2, dans lequel la paroi avant (102, 302) s'étend parallèlement à la paroi arrière (104, 304).

4. Le bloc (100, 300) selon l'une quelconque des revendications 1 à 3, dans lequel la première paroi latérale (106, 306) et la deuxième paroi latérale (108, 308) s'étendent de manière convergente depuis la paroi arrière (104, 304) vers la paroi avant (102, 302).

5. Le bloc (100, 300) selon l'une quelconque des revendications 1 à 4, dans lequel chacune de la première ouverture (110, 310) et de la deuxième ouverture (120, 320) s'étend à travers le bloc (100, 300) de telle sorte que chacune de la première ouverture (110, 310) et la deuxième ouverture (120, 320) sont ouvertes à la fois au niveau d'une surface supérieure (101, 301) et d'une surface inférieure (103, 303) du bloc (100, 300).

6. Le bloc (100, 300) selon l'une quelconque des revendications 1 à 5, dans lequel la troisième ouverture (130, 330) comporte une base (132, 332) de telle sorte que la troisième ouverture (130, 330) est ouverte au niveau de la surface supérieure (101, 301) du bloc (100, 300) et fermée au niveau de la surface inférieure (103, 303) du bloc (100, 300).

7. Le bloc (100, 300) selon l'une quelconque des revendications 1 à 6, dans lequel le bloc (100, 300) est composé d'un matériau en béton poreux.

8. Mur (200) destiné à la croissance de la végétation, comprenant :
une pluralité de blocs (100, 300) selon l'une quelconque des revendications 1 à 7, la pluralité de blocs (100, 300) comprenant un premier bloc (100, 300) et un deuxième bloc (100, 300) dans une première rangée (202a) et un troisième bloc (100, 300) dans une deuxième rangée (202), la première rangée (202a) étant située verticalement à côté de la deuxième rangée (202b), dans laquelle le premier bloc (100, 300) , le deuxième bloc (100, 300) et le troisième bloc (100, 300) sont disposés de telle sorte que :
le premier bloc (100, 300) et le deuxième bloc (100, 300) sont disposés sur une surface supérieure (101, 301) du troisième bloc (100, 300), le premier bloc (100, 300) et le deuxième bloc (100, 300) étant disposés l'un contre l'autre sur une surface latérale (114, 314) de leurs parois arrière respectives (104, 304), dans lequel le premier bloc (100, 300) et le deuxième bloc (100, 300) se rejoignent intermédiairement le long d'une longueur (L₁₀₀ ) de la paroi arrière (104, 304) du troisième bloc (100, 300) ;
la deuxième ouverture (120, 320) du premier bloc (100, 300) chevauche la première ouverture (110, 310) du troisième bloc (100, 300) et la première ouverture (110, 310) du deuxième bloc (100, 300) chevauche la deuxième ouverture (120, 320) du troisième bloc (100, 300), les première et deuxième ouvertures qui se chevauchent (110, 120) formant collectivement une pluralité de canaux (208), chaque canal (208) s'étendant verticalement à travers la pluralité de rangées (202) de telle sorte que l'eau s'écoule vers chaque rangée (202) de la pluralité.

9. Le mur (200) selon la revendication 8, dans laquelle :
la deuxième ouverture (120) du premier bloc (100) chevauche la troisième ouverture (110) du troisième bloc (100) de telle sorte que, lorsque l'on observe les premier et troisième blocs dans une vue de dessus de leurs surfaces supérieures (100), un premier espace (204) est visible entre une surface intérieure de la deuxième paroi latérale (108) du premier bloc (100) et une surface intérieure de la première paroi intérieure (116) du troisième bloc (100), et
la première ouverture (110) du deuxième bloc (100) chevauche la troisième ouverture (110) du troisième bloc (100) de telle sorte que, lorsque les deuxième et troisième blocs sont observés dans une vue de dessus de leurs surfaces supérieures (100), un deuxième espace (206) est visible entre une surface intérieure de la première paroi latérale (106) du deuxième bloc (100) et une surface intérieure de la deuxième paroi intérieure (118) du troisième bloc (100).

10. Le mur (200) selon la revendication 8, dans laquelle la deuxième paroi intérieure (318) du premier bloc (300) est disposée au-dessus de la première paroi latérale (306) du troisième bloc (300) de telle sorte que la deuxième ouverture (120) du premier bloc (300) soit alignée avec la première ouverture (110) du troisième bloc (300), et dans laquelle la première paroi intérieure (316) du deuxième bloc (300) est disposée sur la deuxième paroi latérale (308) du troisième bloc (300) de telle sorte que la première ouverture (110) du deuxième bloc (300) soit alignée avec la deuxième ouverture (120) du troisième bloc (300).

11. Le mur (200) selon l'une quelconque des revendications 8 à 10, dans laquelle la troisième ouverture (130c) du troisième bloc (100, 300) comprend de la terre et de la végétation.

12. Le mur (200) selon l'une quelconque des revendications 8 à 11, dans lequel un matériau absorbant l'eau est disposé dans les canaux (208).

13. Le mur (200) selon l'une quelconque des revendications 8 à 12, dans lequel la pluralité de blocs (100, 300) est disposée sur une surface verticale d'une structure préexistante.

14. Le mur (200) selon l'une quelconque des revendications 8 à 13, comprenant en outre un système de collecte d'eau, ledit système de collecte d'eau étant configuré pour diriger l'eau dans le canal (208).
